Europäisches Patentamt

European Patent Office

Office européen des brevets

(11) Veröffentlichungsnummer: **0 289 698**
**A2**

(12) **EUROPÄISCHE PATENTANMELDUNG**

(21) Anmeldenummer: **88100508.6**

(22) Anmeldetag: **15.01.88**

(51) Int. Cl.⁴: **G11B 23/023 , G11B 33/04**

(30) Priorität: **05.05.87 DE 8706425 U**

(43) Veröffentlichungstag der Anmeldung:
**09.11.88 Patentblatt 88/45**

(84) Benannte Vertragsstaaten:
**AT BE CH DE ES FR GB GR IT LI LU NL SE**

(71) Anmelder: **Datox-Organisation D.
Schweinsberg GmbH & Co. KG
Postfach 1280
D-8633 Rödental(DE)**

(72) Erfinder: **Schweinsberg, Dieter
Gothaer Strasse 2
D-8631 Lautertal(DE)**

(74) Vertreter: **Patentanwälte Müller-Boré, Deufel,
Schön, Hertel, Lewald, Otto
Isartorplatz 6
D-8000 München 2(DE)**

(54) **Vorrichtung zur Aufnahme und Aufbewahrung von Behältern.**

(57) Die Vorrichtung zur Aufnahme und Aufbewahrung von Behältern oder Boxen (12) für Audio-oder
Videokassetten, für Schallplatten und insbesondere
für CD-Platten weist Einsteckelemente (30) zur Aufnahme eines Randbereichs einer Box oder eines
Behälters (12) auf, die verdrehbar und/oder verschiebbar in Seitenschilden (20) angeordnet sind.
Die Boxen oder Behälter (12) werden in die Einsteckelemente eingesteckt und dort über Klemmwirkung
gehalten. Der Deckel einer Box (12) kann bis auf Anschlag geöffnet und zur problemlosen Entnahme des
darin enthaltenen Guts geöffnet werden. Die Einsteckelemente können in Buchordnern, Klappordnern,
Pultordnern oder Drehständern über geeignete
Seitenschilde angeordnet sein.

FIG.2

## Vorrichtung zur Aufnahme und Aufbewahrung von Behältern

Die Erfindung betrifft eine Vorrichtung zur Aufnahme und Aufbewahrung von Behältern oder Boxen für Audio-oder Videokassetten, für Schallplatten und insbesondere für CD-Platten.

Es ist bekannt, derartige Audio-oder Videoaufzeichnungsträger in ihren Boxen oder Behältern in Kästen oder Regalen aus Holz oder Kunststoff aufzubewahren. Diese bekannten Aufbewahrungseinrichtungen erfordern aber einen großen Platzbedarf und sind unhandlich in der Anwendung.

Der Erfindung liegt die Aufgabe zugrunde, eine gattungsgemäße Vorrichtung zu schaffen, mit welcher Behälter oder Boxen raumsparend und unter Beachtung eines Ordnungsprinzips einfach aufbewahrt werden können.

Diese Aufgabe wird erfindungsgemäß dadurch gelöst, daß Einsteckelemente zur Aufnahme eines Randbereichs einer Box oder eines Behälters drehbar und/oder verschiebbar in Seitenschilden vorgesehen sind.

Bei der erfindungsgemäßen Vorrichtung werden die Behälter oder die Boxen, in welchen die Audio-oder Videobänder oder die Platten enthalten sind, in die Einsteckelemente eingesteckt, wobei eine Vielzahl derartiger Einsteckelemente in den Seitenschilden verdrehbar oder verschiebbar gelagert sind, so daß zur Entnahme des Inhalts der Boxen oder Behälter diese an den Einsteckelementen verschwenkt oder umgeklappt werden können.

In einer bevorzugten Ausführungsform sind die Einsteckelemente kanalförmig mit Längsseitenwänden ausgebildet und an den Stirnseiten mit überstehenden Zapfen versehen, welche in geeignete Aufnahmen in den Seitenschilden eingreifen.

Vorzugsweise sind die Einsteckelemente mit Stirnflächen ausgebildet, so daß eine seitliche Arretierung der Boxen oder Behälter erfolgt.

In Weiterbildung der Erfindung ist eine Längsseitenwand der Einsteckelemente nicht mit den Stirnflächen verbunden, so daß zum einen die Federwirkung einer Längsseitenwand benutzt werden kann, um die eingesteckten Boxen oder Behälter einzuklemmen, und zum anderen ist es dadurch möglich, den Deckel beispielsweise von Boxen oder Behältern für CD-Platten, die an einem Randbereich angelenkt sind, aufzuklappen.

Gemäß einer weiteren bevorzugten Ausführungsform sind die Einsteckelemente mit einem Mittelsteg und senkrecht dazu verlaufenden Stirnflächen zum Festklemmen an Außenseiten einer Box oder eines Behälters ausgebildet und Zapfen zum Eingriff in die Seitenschilde sind an den Außenseiten der Stirnflächen vorgesehen. Diese Einsteckelemente sind ausgebildet insbesondere zum Festhalten eines Behälters für mehr als eine CD-Platte, also eines CD-Albums, bei welchem an einem Mittelkörper auf beiden Seiten je eine - schwenkbare Klappe mit einer Halterung für eine CD-Platte angelenkt ist. Der Mittelsteg greift in die von den Klappen begrenzte Rille am Behälterrücken ein und die Stirnflächen des Einsteckelements klemmen den Behälter an der oberen und der unteren Schmalseite ein.

Vorzugsweise ist der Mittelsteg des Einsteckelements aus Gründen der Festigkeit und Steifigkeit mit einer Stützfläche im Querschnitt kreuzförmig ausgebildet.

Um die Klappen an dem Mittelkörper des Behälters verschwenken zu können während dieser in dem Einsteckelement angeordnet ist, sind die Stirnflächen des Einsteckelements über eine Nut von den Enden des Mittelstegs getrennt.

Gemäß einer bevorzugten Ausführungsform sind die Innenseiten der Stirnflächen der Einsteckelemente mit einer Riffelung, einer Aufrauhung, einer Haftbeschichtung oder dgl. versehen, die in Zusammenwirken mit den überlicherweise geriffelten Schmalseiten eines CD-Platten-Behälters eine feste Verbindung zwischen Einsteckelement und Behälter erbringt. Ferner können die Stirnflächen zueinanderhin vorgespannt sein, um die Klemmwirkung auf den Plattenbehälter zu verbessern.

Die Zapfen zum Verschwenken der Einsteckelemente sind vorzugsweise an deren Unterseite angeordnet. Ansätze zur Halterung der Zapfen sind dabei im Querschnitt vorzugsweise etwa dreieckig ausgebildet, so daß die Einsteckelemente über einen weiten Bereich verschwenkt werden können.

Die Seitenschilde sind vorzugsweise mit einer Nut zur Aufnahme der Zapfen der Einsteckelemente ausgebildet, so daß die Einsteckelemente sowohl verschwenkt als auch über einen gewissen Bereich verschoben werden können. Die Seitenschilde sind dabei im Querschnitt vorzugsweise L-förmig ausgebildet, wobei ein Schenkel mit der Nut ausgebildet, und der ander Schenkel zur Befestigung an einem geeigneten Träger vorgesehen ist.

Die Einsteckelemente und die Seitenschilde bestehen vorzugsweise aus Kunststoff.

Gemäß einer bevorzugten Ausführungsform sind die Seitenschilde am Rücken eines Einbandes befestigt, welcher verschließbar ausgebildet sein kann.

Gemäß einer weiteren bevorzugten Ausführungsform sind die Seitenschilde am Rücken eines Klapp-oder Pultordners angeordnet.

In weiterer Ausgestaltung der Erfindung können die Seitenschilde kreis-oder ringförmig ausgebildet und an einem Drehständer befestigt sein.

Ein Ausführungsbeispiel der Erfindung wird nachstehend anhand der Zeichnung näher erläutert. Es zeigt

Fig. 1 eine als Buchform ausgebildete Vorrichtung zur Aufnahme und Aufbewahrung von CD-Platten,

Fig. 2 die Vorrichtung nach Figur 1 in aufgeklapptem Zustand,

Fig. 3 eine Seitenansicht auf ein Einsteckelement,

Fig. 4 einen Schnitt längs der Linie IV-IV von Fig. 3,

Fig. 5 einen Schnitt längs der Linie V-V von Fig. 1.

Fig. 6 ein Einsteckelement für den Behälter eines CD-Platten-Albums in perspektivischer Ansicht,

Fig. 7 das Einsteckelement von Fig. 7 in Seitenansicht und

Fig. 8 einen Schnitt längs der Linie VIII - VIII von Fig. 7.

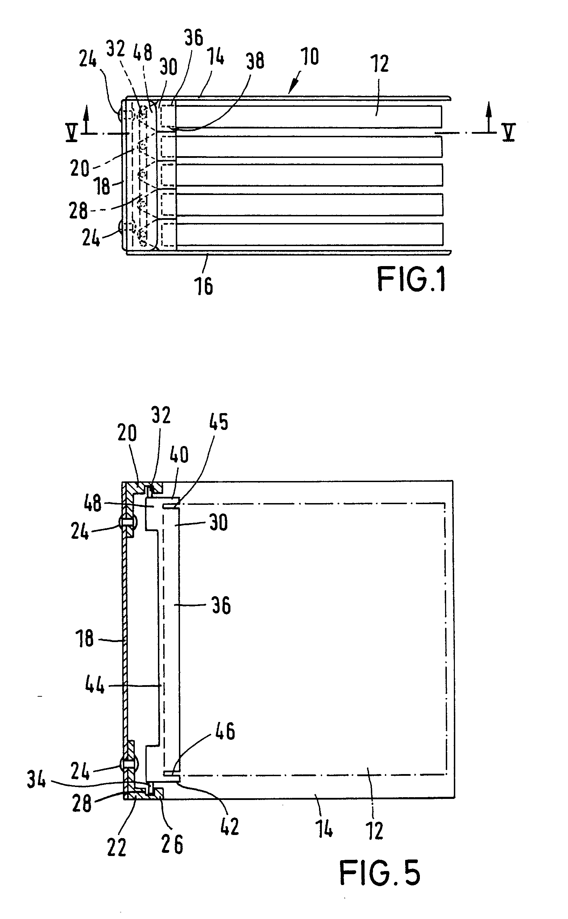

Fig. 1 zeigt eine Vorrichtung 10 zur Aufnahme und Aufbewahrung von Boxen 12, in welchen CD-Platten enthalten sind. Die Vorrichtung 10 besteht aus einem Einband mit einer Deckfläche 14, einer Bodenfläche 16 und einem Rücken 18. An dem Rücken 18 sind Seitenschilde 20 und 22 über Nieten 24 befestigt. Die Seitenschilde 20 und 22 sind L-förmig ausgebildet und weisen in dem senkrecht von dem Einbandrücken 18 abstehenden Schenkel 26 eine Längsnut 28 auf, die an ihren Enden geschlossen ist.

Die Seitenschilde 20 und 22 dienen der Aufnahme und Halterung von Einsteckelementen 30, die dazu an ihren Stirnflächen mit Zapfen 32 und 34 ausgebildet sind. Die Einsteckelemente 30 sind kanalförmig ausgebildet und im Querschnitt rechteckig. Sie weisen Längsseitenflächen 36 und 38, Stirnflächen 40 und 42 und eine Bodenfläche 44 auf. Die Längsseitenfläche 36 ist nicht mit den Stirnflächen 40 und 42 verbunden, sondern über Einschnitte 45, 46 von diesen getrennt. Mit Hilfe dieser Einschnitte ist es möglich, die Längsseitenwand 36 nach innen vorgespannt anzuordnen, so daß eine ausreichende Klemmwirkung auf die Box oder den Behälter 12 ausgeübt werden kann. Ferner dienen die Einschnitte 45 und 46 für den Durchgang der Enden des Deckels der Box oder des Behälters 12, mit welchen der Deckel an dem Unterteil der Box oder des Behälters angelenkt ist.

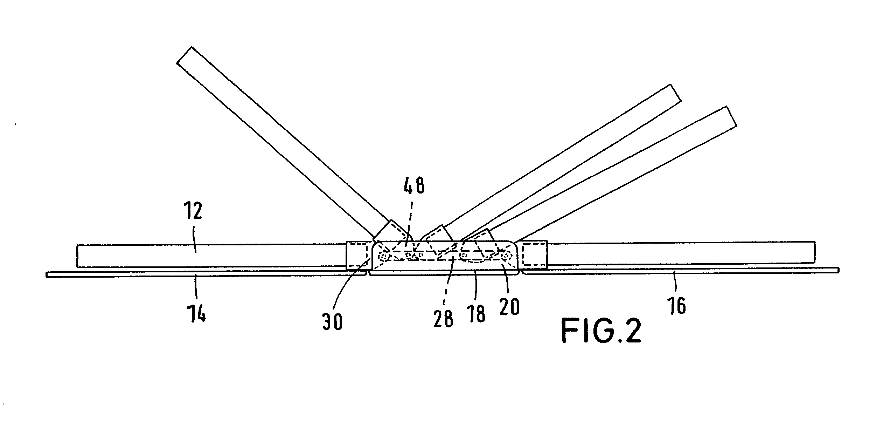

Die Zapfen 32 und 34 sind an der Unterseite der Bodenfläche 44 angeordnet. Dazu sind an der Unterseite im Querschnitt dreieckige Ansätze 48 angeformt. Wie aus Fig. 2 zu ersehen ist, ermöglichen es die im Querschnitt dreieckig ausgebildeten Ansätze 48, daß die Einsteckelemente 30 zusammen mit den Behältern oder Boxen 12 über einen weiten Bereich aufgeklappt oder umgelegt werden können.

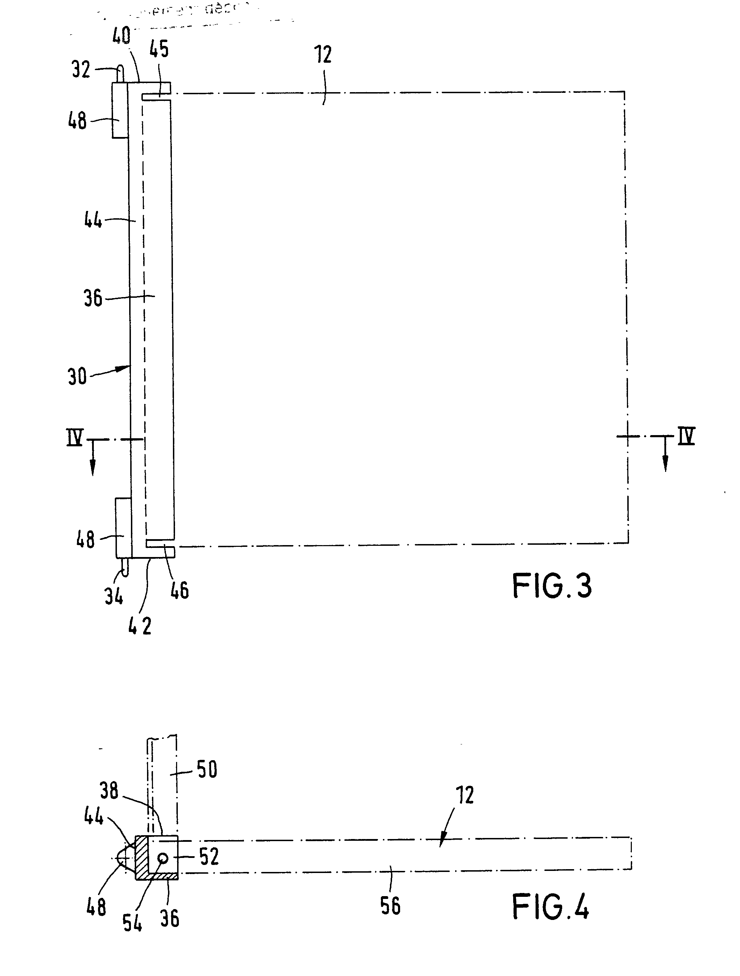

Fig. 3 zeigt eine Box oder einen Behälter 12, der mit seinem linken Randbereich in das Einsteckelement 30 eingesteckt ist. Fig. 4 zeigt einen Schnitt durch das Einsteckelement 30, wobei der Deckel 50 der Box oder des Behälters 12 aufgeklappt ist, um die in diesem befindliche CD-Platte zugänglich zu machen. Die Enden 52 des Deckels 50 verlaufen dabei durch die Einschnitte 45 und 46, so daß der Deckel bis auf Anschlag zur problemlosen Entnahme beispielsweise der CD-Platte geöffnet werden kann. Der Deckel 50 ist über ein Gelenk 54 an dem unteren Teil 56 des Behälters oder der Box 12 angelenkt.

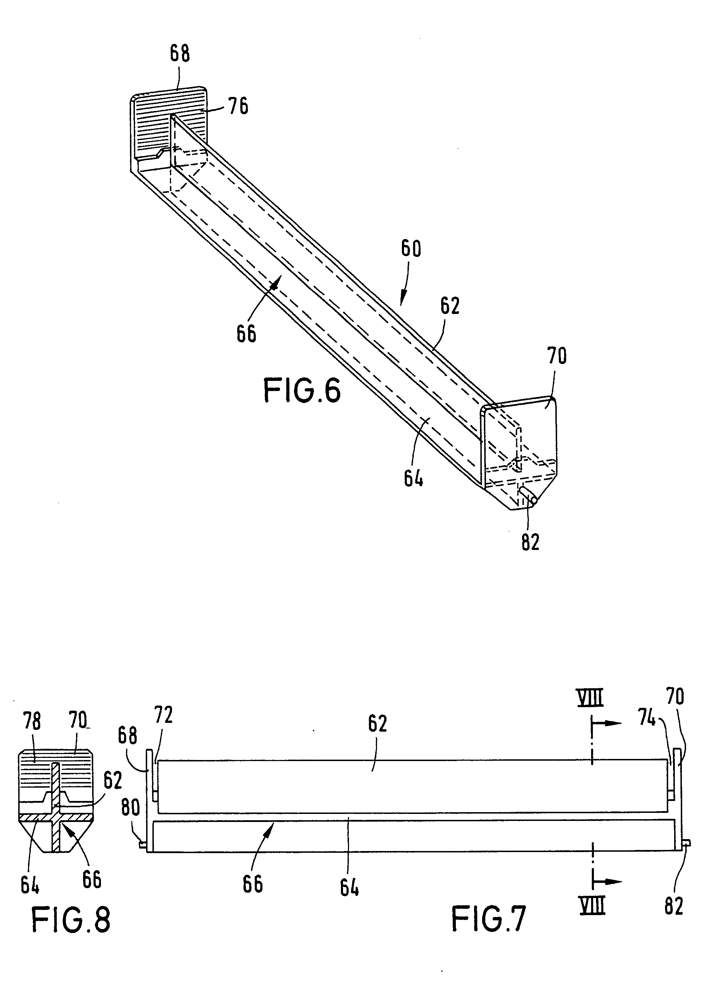

Das in Fig. 6 gezeigte Einsteckelement 60 ist gedacht zum Festhalten der Box oder des Behälters eines CD-Platten-Albums, d.h. einer aus mehr als einer Platte bestehenden Aufnahme. Ein derartiger Behälter weist einen Mittelkörper auf, an welchem an einer Schmalseite zwei Klappen schwenkbar angelenkt sind. Die Klappen begrenzen an der Anlenkseite eine Rille, in welche ein Mittelsteg 62 des Einsteckelements 60 eingreift. Durch den Mittelsteg 62 ist das Einsteckelement 60 in Querrichtung an der CD-Plattenbox festgelegt. Der Mittelsteg 62 bildet zusammen mit einer Stützfläche 64 einen einen im Querschnitt kreuzförmigen Stützkörper 66. An den Stirnseiten des Stützkörpers 66 sind Stirnflächen 68, 70 angeordnet. Der in die Rille an der CD-Plattenbox eingreifende Teil des Mittelstegs 62 ist über Nuten 72, 74 von den Stirnflächen 68, 70 getrennt. In diese Nuten 72, 74 greifen die obere und die untere Schmalseite einer CD-Platten-Albumbox ein.

Die Innenseiten der Stirnflächen 68, 70 sind mit einer Riffelung 76, 78 versehen, die in Zusammenwirken mit den üblicherweise geriffelten Flächen der oberen und unteren Schmalseite der Plattenbox einen festen Zusammenhalt zwischen Einsteckelement und Plattenbox erbringt. Zusätzlich können die Stirnflächen 68, 70 etwas zueinanderhin vorgespannt sein, so daß die Klemmwirkung auf die Plattenbox erhöht wird.

An der Außenseite der Stirnflächen 68, 70 sind Zapfen 80, 82 angeordnet, vorzugsweise angeformt, mittels derer das Einsteckelement 60 in den Seitenschilden eines Ordners, beispielsweise des Ordners 10 von Fig. 1 eingesetzt werden kann.

Die Einsteckelemente und die Seitenschilde sind vorzugsweise aus Kunststoff ausgebildet. Die Zapfen zur Lagerung der Einsteckelemente in der Nut der Seitenschilde können dabei einstückig an den Einsteckelementen angeformt sein. Es ist auch möglich, durchlaufende Metallstäbe als Schwenkzapfen zu verwenden.

Der Einband des Orders, in welchem die Einsteckelemente gelagert sind, kann derart ausgestaltet sein, daß er an der dem Rücken gegenüberliegenden Seite verschlossen werden kann, um die aufgenommenen Boxen oder Behälter zu schützen und zusammenzuhalten. Ferner ist möglich, die Seitenschilde mit darin angeordneten Einsteckelementen an Klapp-oder Pultordnern anzubringen. Ebenfalls ist es möglich, die Seitenschilde ring- oder kreisförmig auszubilden, um die Einsteckelemente in senkrechter oder waagrechter Stellung in Drehständern anzuordnen.

## Ansprüche

1. Vorrichtung zur Aufnahme und Aufbewahrung von Behältern oder Boxen (12) für Audio-oder Videokassetten, für Schallplatten und insbesondere für CD-Platten, dadurch **gekennzeichnet** , daß Einsteckelemente (30) zur Aufnahme eines Randbereichs einer Box oder eines Behälters (12) verdrehbar und/oder verschiebbar in Seitenschilden (20) vorgesehen sind.

2. Vorrichtung nach Anspruch 1, dadurch **gekennzeichnet** , daß die Einsteckelemente (30) kanalförmig mit Längsseitenwänden (36, 38) ausgebildet und an den Stirnseiten mit überstehenden Zapfen (32, 34) versehen sind.

3. Vorrichtung nach Anspruch 1 oder 2, dadurch **gekennzeichnet** , daß die Einsteckelemente (30) mit Stirnflächen (40, 42) ausgebildet sind, und daß eine Längsseitenwand (36) der Einsteckelemente (30) nicht mit den Stirnflächen (40, 44) verbunden ist.

4. Vorrichtung nach Anspruch 1, dadurch **gekennzeichnet** , daß die Einsteckelemente (60) einen Mittelsteg (62) und senkrecht dazu verlaufende Stirnflächen (68, 70) zum Festklemmen an Außenseiten einer Box oder eines Behälters aufweisen, und daß Zapfen (80, 82) zum Eingriff in die Seitenschilde an den Außenseiten der Stirnflächen (68, 70) vorgesehen sind.

5. Vorrichtung nach Anspruch 4, dadurch **gekennzeichnet** , daß der Mittelsteg (62) mit einer Stützfläche (64) einen im Querschnitt kreuzförmigen Stützkörper (66) bildet, und daß die Stirnflächen (68, 70) über Nuten (70, 72) von den Enden des Mittelstegs (62) getrennt sind.

6. Vorrichtung nach einem der Ansprüche 4 oder 5, dadurch **gekennzeichnet** , daß die Stirnflächen (68, 70) an den Innenseiten mit einer Riffelung (76, 78) einer Aufrauhung, einer Haftbeschichtung oder dgl. versehen und/oder zueinanderhin vorgespannt sind.

7. Vorrichtung nach einem der Ansprüche 1 bis 6, dadurch **gekennzeichnet** , daß die Zapfen (32, 34) an der Unterseite (44) der Einsteckelemente (30) angeordnet sind, und daß die Ansätze (48) zur Halterung der Zapfen (32, 34) im Querschnitt etwa dreieckig ausgebildet sind.

8. Vorrichtung nach einem der Ansprüche 1 bis 10, dadurch **gekennzeichnet** , daß die Seitenschilde (20, 22) mit einer Nut (28) zur Aufnahme der Zapfen (32, 34) der Einsteckelemente (30) ausgebildet sind.

9. Vorrichtung nach einem der Ansprüche 1 bis 11, dadurch **gekennzeichnet** , daß die Seitenschilde (20, 22) im Querschnitt L-förmig ausgebildet sind und am Rücken (18) eines Einbandes, am Rücken eines Pultordners oder am Rücken eines Klappordners befestigt sind, oder daß die Seitenschilde kreis-oder ringförmig ausgebildet und an einem Drehständer befestigt sind.

10. Vorrichtung nach einem der Ansprüche 1 bis 9, dadurch **gekennzeichnet** , daß die Einsteckelemente (30) und die Seitenschilde (20, 22) aus Kunststoff bestehen.

FIG.1

FIG.5

FIG.2

0 289 698

FIG.3

FIG.4

68

76

60

62

66

70

64

82

**FIG.6**

78 70

68 72

62

VIII

74 70

62

80

66 64

82

64 66

66 64

VIII

**FIG.8**

**FIG.7**